Europäisches Patentamt

European Patent Office

Office européen des brevets

(11) Publication number: **0 272 033**
**A2**

## EUROPEAN PATENT APPLICATION

(21) Application number: 87310766.8

(22) Date of filing: 08.12.87

(51) Int. Cl.⁴ **C08G 63/66** , **C11D 3/37** ,
**C11D 17/04**

(30) Priority: 15.12.86 GB 8629936

(43) Date of publication of application:
22.06.88 Bulletin 88/25

(84) Designated Contracting States:
AT BE CH DE FR GB GR IT LI LU NL SE

(71) Applicant: THE PROCTER & GAMBLE
COMPANY
One Procter & Gamble Plaza
Cincinnati Ohio 45202(US)

(72) Inventor: Gosselink, Eugene Paul
3754 Susanna Drive
Cincinnati Ohio 45239(US)
Inventor: Diehl, Francis Louvaine
53 Fleming Road
Wyoming Ohio 45215(US)

(74) Representative: Brooks, Maxim Courtney et al
Procter & Gamble (NTC) Limited Whitley
Road Longbenton
Newcastle-upon-Tyne NE12 9TS(GB)

(54) Terephthalate ester copolymers and their use in laundry compositions.

(57) Terephthalate ester copolymer useful as soil release agent in detergent and fabric conditioning compositions and articles. The copolymer has the general formula

$$Z-[(T-PO)_u (T-PEG)_v]-T-Z_1 \qquad I$$

wherein Z and $Z_1$ are chain terminating moieties having the empirical formula II

$$(PEG_1-X)_a(PO-H)_b(PEG-H)_c \qquad II$$

wherein PEG and $PEG_1$ are identical or different poly(oxyethylene)oxy moieties each having a molecular weight in the range from about 300 to about 6000; X is $C_1-C_4$ alkyl or acyl containing from 1 to 4 carbon atoms in the alkyl moiety; T is a terephthaloyl moiety; PO is oxypropyleneoxy; u is from about 0.5 to about 50; v is from about 0.05 to about 20; a is from about 0.2 to about 0.95; b is from 0 to about 0.8; c is from 0 to about 0.8; and b + c is at least about 0.05; wherein u, v, a, b, c represent the average number of the corresponding units; and wherein the T-PO and T-PEG units are randomly distributed along the terephthalate ester backbone.

EP 0 272 033 A2

## TEREPHTHALATE ESTER COPOLYMERS AND THEIR USE IN LAUNDRY COMPOSITIONS

Technical Field

The present invention relates to copolymers based on a terephthalate ester backbone and to their use as soil-release agents in laundry detergent and fabric conditioner compositions and articles.

Background

In addition to cleaning or softening performance, laundry detergent or conditioning compositions desirably have other benefits. One is the ability to confer soil release properties to fabrics, particularly those woven from polyester fibres. These fabrics are mostly copolymers of ethylene glycol and terephthalic acid, and are sold under a number of tradenames, e.g. Dacron, Fortrel, Kodel and Blue C Polyester. The hydrophobic character of polyester fabrics makes their laundering difficult, particularly as regards oily soil and oily stains. The oily soil or stain preferentially "wets" the fabric. As a result, the oily soil or stain is difficult to remove in an aqueous laundering process.

High molecular weight (e.g., 40,000 to 50,000 M.W.) polyesters containing random ethylene terephthalate/polyethylene glycol terephthalate units have been used as soil release compounds in laundry detergent compositions - see for example US-A-3,962,152 and US-A-3,959,230. During the laundering operation, these soil release polyesters adsorb onto the surface of fabrics immersed in the wash solution. The adsorbed polyester than forms a hydrophilic film which remains on the fabric after it is removed from the wash solution and dried. This film can be renewed by subsequent washing of the fabric with a detergent composition containing the soil release polyester.

Copolymers based on glycol terminated poly (oxyethylene terephthalate) or poly(oxypropylene terephthalate) polymers have also been taught for use as soil release agents in laundry detergent and fabric conditioning compositions - see EP-A-0,185,427 and EP-A-0194127.

The present invention relates to polyesters having improved soil release performance when incorporated in laundry detergent and textile treatment compositions. The polyesters also provide cleaning benefits in terms of greasy/oily stain removal as well as whiteness maintenance benefits. In contrast to a number of prior art polymers, there is no adverse effect on clay soil detergency performance and indeed, particularly in low or zero phosphate detergent compositions, clay soil cleaning performance can actually be enhanced.

Summary of the Invention

Accordingly, the present invention provides a copolymer based on a terephthalate ester backbone and having the general formula I

$$Z-[(T-PO)_u(T-PEG)_v]-T-Z_1 \qquad I$$

wherein Z and $Z_1$ are chain terminating moieties having the empirical formula II

$$(PEG_1-X)_a (PO-H)_b (PEG-H)_c \qquad II$$

and wherein PEG and $PEG_1$ are identical or different poly(oxyethylene)oxy moieties (ie, $[(OC_2H_4)_nO]$) each having a molecular weight in the range from about 300 to about 6000; X is $C_1$-$C_4$ alkyl or acyl containing from 1 to 4 carbon atoms in the alkyl moiety; T is a terephthaloyl moiety (ie, p-$COC_6H_4CO$); PO is oxypropyleneoxy moiety (ie, $OC_3H_6O$); u is from about 0.5 to about 50, preferably from about 0.5 to about 20; v is from about 0.05 to about 20, preferably from about 0.05 to about 10; a is from about 0.2 to about 0.95; b is from 0 to about 0.8; c is from 0 to about 0.8; and b + c is at least about 0.05; wherein u, v, a, b, c represent the average number of the corresponding units; and wherein the T-PO and T-PEG units are randomly distributed along the terephthalate ester backbone. The term 'copolymer' herein refers generally to mixtures of oligomeric polyester compounds or to the individual compounds themselves.

Preferred from the viewpoint of optimum soil-release and cleaning performance are polyesters wherein u, the number average of T-PO units in the backbone, is in the range from about 2 to about 15, preferably from about 3 to about 10, and v, the number average of T-PEG units in the backbone, is in the range from about 0.1 to about 5, preferably from about 0.1 to about 3. The ratio u:v on the other hand is preferably from about 50:1 to about 1:1, more preferably from about 15:1 to 2:1, especially from about 10:1 to about

2

3:1.

With regard to the chain terminating units, a, the average number of $PEG_1\text{-}X$ units per chain-end is in the range from about 0.2 to about 0.95, preferably from about 0.35 to about 0.9; b, the average number of PO-H units per chain-end is in the range from 0 to about 0.8, preferably from about 0.05 to about 0.8, more preferably from about 0.1 to about 0.65; and c, the average number of PEG-H units per chain-end is in the range from 0 to about 0.8, preferably from about 0 to about 0.15. The sum total of a, b and c, of course, is equal to 1. The sum total of b + c is at least about 0.05. Moreover, preferred compounds comprise at least about 5%, more preferably at least 15% of materials wherein both Z and $Z_1$ have the formula $PEG_1\text{-}X$.

The values of u, v, a, b and c are determined herein by 270 MHz $C_{13}$-NMR from the relative peak areas of the polymer terminating group carbons (x and oxypropylene glycol), the oxypropyleneoxy spacer carbons, the alpha carbons of poly(oxyethylene)oxy carbonyl units, and the terephthalate carbons. The corresponding chemical shift values (ppm) are approximately 58(X = Me); 19 and 15.5 (oxypropyleneglycol methyl, two isomers); 64 and 64.5 (oxypropyleneglycol methylenes, two isomers); 15.5 (oxypropyleneoxy methyl); 68.5 and 66 (oxypropyleneoxy methylenes, two isomers); 63.5 [alpha carbon of poly(oxyethylene)-oxycarbonyl]; and 164, 133 and 129 (terephthalate carbonyl, 1,4 carbons and 2,3,5,6 carbons respectively). Spectra are run in deuterochloroform as solvent and chemical shifts are quoted against the deuterochloroform $C_{13}$ as reference (77.1 ppm).

The polyesters of the present invention are typically made by reacting propylene glycol, one or more polyethylene glycols capped at one end with a capping group (X) selected from $C_1\text{-}C_4$ alkyl, aryl, aralkyl, aroyl or acyl having from 1 to 4 carbon atoms in the alkyl moieties, an uncapped polyethylene glycol and terephthalic acid or a diester thereof. The polyethyleneglycols, both capped and uncapped have a degree of ethoxylation of at least about 6 and preferably in the range from about 9 to about 180, more preferably from about 12 to about 90, especially from about 25 to about 45.

The capped polyethyleneglycol used to prepare polyesters of the present invention is typically methyl capped and can be formed by ethoxylation of the respective alcohol with ethylene oxide. Also, methyl capped polyethyleneglycols are commercially available from Union Carbide under the trade name Methoxy Carbowax and from Aldrich Chemical Company under the name poly(ethylene glycol) methyl ether. These commercial methyl capped PEGs have molecular weights of 350 (n = about 7.5), 550 (n = about 12), 750 (n = about 16), 1900 (n = about 43), and 5000 (n = about 113). Methyl capped polyethyleneglycols are also available from Hoechst.

The preferred method for preparing polyesters of the present invention comprises reacting the desired mixture of lower dialkyl esters (methyl, ethyl, propyl or butyl) of terephthalic acid with a mixture of 1,2-propylene glycol, uncapped polyethyleneglycol and capped polyethyleneglycol. The glycol esters and oligomers produced in this ester interchange reaction are then polymerized to the desired degree. The ester interchange reaction can be conducted in accordance with reaction conditions generally used for ester interchange reactions. This ester interchange reaction is usually conducted at temperatures of from 120°C to 220°C in the presence of an esterification catalyst. Alcohol is formed and constantly removed thus forcing the reaction to completion. Higher temperatures can be used if the reaction is conducted under pressure.

The catalysts used for the ester interchange reaction are those well known to the art. These catalysts include alkyl and alkaline earth metals, for example lithium, sodium, calcium, and magnesium, as well as transition and Group II B metals, for example antimony, manganese, cobalt, and zinc, usually as the respective oxides, carbonates, or acetates. Typically, antimony trioxide and calcium acetate are used.

The extent of the ester interchange reaction can be monitored by the amount of alcohol liberated or the disappearance of the dialkyl esters of the dibasic acids in the reaction mixture as determined by high performance liquid chromatography (HPLC) or any other suitable method.

If desired, stabilizers such as phosphorus and phosphoric acid and esters thereof can be added at the end of the ester interchange step. The purpose of the stabilizier is to inhibit degradation, oxidation, and other side reactions; to destroy the catalytic activity of the ester interchange catalyst; and to prevent precipitation of insoluble metal carboxylates. Typically, stabilizers are not used to make the polyesters of the present invention.

After the ester interchange reaction, the glycol ester products are then polymerized to produce polyesters. The desired degree of polymerization can be determined by HPLC and NMR analysis. For commercial processes, the polymerization reaction is usually conducted at temperatures of from about 200° to about 280°C in the presence of a catalyst. Higher temperatures can be used but tend to produce darker colored products. Illustrative examples of catalysts useful for the polymerization step include antimony trioxide, germanium dioxide, titanium alkoxide, hydrated antimony pentoxide, and ester interchange catalysts such as salts of zinc, cobalt and maganese.

Excess glycol and other volatiles liberated during the reaction are removed under vacuum. The reaction is continued monitoring the degree of polymerization by NMR and/or reverse phase HPLC and/or gel phase permeation chromatography.

The copolymers are particularly useful in detergent compositions to provide soil release properties and are especially effective in low phosphate detergent compositions containing 0-2%, preferably 0-1 2% P. The detergent compositions of the invention can take the form of a conventional main wash laundry detergent composition or of a laundry additive composition for use together with a separate main-wash detergent composition. In either instance, however, preferred compositions will normally contain from about 1% to about 75%, more preferably from about 5% to about 25% by weight of an anionic, nonionic, cationic, ampholytic or zwitterionic or mixture thereof. The compositions can also be complemented by other usual laundry detergent components such as detergency builders, bleaches etc.

Suitable synthetic anionic surfactants are water-soluble salts of $C_8$-$C_{22}$ alkyl benzene sulphonates, $C_8$-$C_{22}$ alkyl sulphates, $C_{10-18}$ alkyl polyethoxy ether sulphates, $C_{8-24}$ paraffin sulphonates, alpha-$C_{12-24}$ olefin sulphonates, alpha-sulphonated $C_6$-$C_{20}$ fatty acids and their esters, $C_{10}$-$C_{18}$ alkyl glyceryl ether sulphonates, fatty acid monoglyceride sulphates and sulphonates, especially those prepared from coconut oil, $C_8$-$C_{12}$ alkyl phenol polyethoxy ether sulphates, 2-acyloxy $C_9$-$C_{23}$ alkane-1-sulphonate, and beta-alkyloxy $C_8$-$C_{20}$ alkane sulphonates.

A particularly suitable class of anionic surfactants includes water-soluble salts, particularly the alkali metal, ammonium and alkanolammonium salts or organic sulphuric reaction products having in their molecular structure an alkyl or alkaryl group containing from about 8 to about 22, especially from about 10 to about 20 carbon atoms and a sulphonic acid or sulphuric acid ester group. (Included in the term "alkyl" is the alkyl portion of acyl groups).

Examples of this group of synthetic detergents are the sodium and potassium alkyl sulphates, especially those obtained by sulphating the higher alcohols ($C_{8-18}$) carbon atoms produced by reducing the glycerides of tallow or coconut oil and sodium and potassium alkyl benzene sulphonates, in which the alkyl group contains from about 9 to about 15, especially about 11 to about 13, carbon atoms, in straight chain or branched chain configuration, e.g. those of the type described in U.S.-A-2,220,099 and U.S.-A-2,477,383 and those prepared from alkylbenzenes obtained by alkylation with straight chain chloroparaffins (using aluminium trichloride catalysis) or straight chain olefins (using hydrogen fluoride catalysis). Especially valuable are linear straight chain alkyl benzene sulphonates in which the average of the alkyl group is about 11.8 carbon atoms, abbreviated as $C_{11.8}$ LAS, and $C_{12}$-$C_{15}$ methyl branched alkyl sulphates.

The alkane chains of the foregoing non-soap anionic surfactants can be derived from natural sources such as coconut oil or tallow, or can be made synthetically as for example using the Ziegler or Oxo processes. Water solubility can be achieved by using alkali metal, ammonium or alkanolammonium cations; sodium is preferred.

Suitable fatty acid soaps herein can be selected from the ordinary alkali metal (sodium, potassium), ammonium, and alkylolammonium salts of higher fatty acids containing from about 8 to about 24, preferably from about 10 to about 22 and especially from about 16 to about 22 carbon atoms in the alkyl chain. Fatty acids in partially neutralized form are also suitable for use herein, especially in liquid compositions. Sodium and potassium soaps can be made by direct saponification of the fats and oils or by the neutralization of the free fatty acids which are prepared in a separate manufacturing process. Particularly useful are the sodium and potassium salts of the mixtures of fatty acids derived from tallow and hydrogenated fish oil.

Mixtures of anionic surfactants are particularly suitable herein, especially mixtures of sulphonate and sulphate surfactants in a weight ratio of from about 5:1 to about 1:5, preferably from about 5:1 to about 1:1, more preferably from about 5:1 to about 1.5:1. Especially preferred is a mixture of an alkyl benzene sulphonate having from 9 to 15, especially 11 to 13 carbon atoms in the alkyl radical, the cation being an alkali metal, preferably sodium; and either an alkyl sulphate having from 10 to 20, preferably 12 to 18 carbon atoms in the alkyl radical or an ethoxy sulphate having from 10 to 20, preferably 10 to 16 carbon atoms in the alkyl radical and an average degree of ethoxylation of 1 to 6, having an alkali metal cation, preferably sodium.

Nonionic surfactants suitable herein are condensates of ethylene oxide with a hydrophobic moiety to provide a surfactant having an average hydrophilic-lipophilic balance (HLB) in the range from about 8 to 17, preferably from about 9.5 to 13.5, more preferably from about 10 to about 12.5.

Examples of suitable nonionic surfactants include the condensation products of primary or secondary aliphatic alcohols having from 8 to 24 carbon atoms, in either straight chain or branched chain configuration, with from 2 to about 40 moles, preferably 2 to about 9 moles of ethylene oxide per mole of alcohol. Preferably, the aliphatic alcohol comprises between 9 and 18 carbon atoms and is ethoxylated with between 2 and 9, desirably between 3 and 8 moles of ethylene oxide per mole of aliphatic alcohol. The preferred

4

surfactants are prepared from primary alcohols which are either linear (such as those derived from natural fats or, prepared by the Ziegler process from ethylene, e.g. myristyl, cetyl, stearyl alcohols), or partly branched such as the Lutensols, Dobanols and Neodols which have about 25% 2-methyl branching (Lutensol being a Trade Name of BASF, Dobanol and Neodol being Trade Names of Shell), or Synperonics, which are understood to have about 50% 2-methyl branching (Synperonic is a Trade Name of I.C.I.) or the primary alcohols having more than 50% branched chain structure sold under the Trade Name Lial by Liquichimica. Specific examples of nonionic surfactants falling within the scope of the invention include Dobanol 45-4, Dobanol 45-7, Dobanol 45-9, Dobanol 91-2.5, Dobanol 91-3, Dobanol 91-4, Dobanol 91-6, Dobanol 91-8, Dobanol 23-6.5, Synperonic 6, Synperonic 14, the condensation products of coconut alcohol with an average of between 5 and 12 moles of ethylene oxide per mole of alcohol, the coconut alkyl portion having from 10 to 14 carbon atoms, and the condensation products of tallow alcohol with an average of between 7 and 12 moles of ethylene oxide per mole of alcohol, the tallow portion comprising essentially between 16 and 22 carbon atoms. Secondary linear alkyl ethoxylates are also suitable in the present compositions, especially those ethoxylates of the Tergitol series having from about 9 to 15 carbon atoms in the alkyl group and up to about 11, especially from about 3 to 9, ethoxy residues per molecule.

Other suitable nonionic surfactants include the condensation products of $C_6$-$C_{12}$ alkyl phenols with from about 3 to 30, preferably 5 to 14 moles of ethylene oxide, and the compounds formed by condensing ethylene oxide with a hydrophobic base formed by the condensation of propylene oxide with propylene glycol, such synthetic nonionic detergents being available on the market under the Trade Name of "Pluronic" supplied by Wyandotte Chemicals Corporation.

Especially preferred nonionic surfactants for use herein are the $C_9$-$C_5$ primary alcohol ethoxylates containing 3-8 moles of ethylene oxide per mole of alcohol, particularly the $C_{12}$-$C_{15}$ primary alcohols containing 6-8 moles of ethylene oxide per mole of alcohol.

The compositions of the invention preferably also contain from about 0.1% to about 20%, more preferably from about 0.5% to about 15%, especially from about 1% to about 5% of a water-soluble quaternary ammonium surfactant. Preferred for use herein are quaternary ammonium surfactants having the general formula:

$$[R^2(OR^3)_y][R^4(OR^3)_y]_2R^5N \ X$$

wherein $R^2$ is an alkyl, alkenyl or alkyl benzyl group having from about 8 to about 18 carbon atoms, preferalby 10 to 14 carbon atoms in the alkyl chain; each $R^3$ is selected from $-CH_2CH_2$--$CH_2CH(CH_3)$-, $-CH_2CH(CH_2OH)$-, $-CH_2CH_2CH_2$-, and mixtures thereof; each $R^4$ is selected from $C_1$-$C_4$ alkyl, $C_1$-$C_4$ hydroxyalkyl, benzyl, ring structures formed by joining the two $R^4$ groups, $-CH_2CHOHCHOHCOR^6CHOHCH_2OH$ wherein $R^6$ is any hexose or hexose polymer having a molecular weight less than about 1,000, and hydrogen when y is not 0; $R^5$ is the same as $R^4$ or is an alkyl chain wherein the total number of carbon atoms of $R^2$ plus $R^5$ is not more than about 18; each y is from 0 to about 10 and the sum of the y values is from 0 to about 15; and x is any compatible anion.

Preferred of the above are the alkyl quaternary ammonium surfactants, especially the mono-long chain alkyl susrfactants described in the above formula when $R^5$ is selected from the same groups as $R^4$. The most preferred quaternary ammonium surfactants are the chloride, bromide and methylsulfate alkyl trimethylammonium salts, alkyl di(hydroxyethyl)methylammonium salts, alkyl hydroxyethyldimethylammonium salts, and alkyloxypropyl trimethylammonium salts wherein alkyl is $C_8$-$C_{16}$, preferably $C_{10}$-$C_{14}$. Of the above, decyl trimethylammonium methylsulfate, lauryl trimethylammonium chloride, myristyl trimethylammonium bromide and coconut trimethylammonium chloride and methylsulfate are particularly preferred.

Other useful cationic surfactants are disclosed in US-A-4,259,217.

Highly preferred water-soluble cationic surfactants herein have a critical micelle concentration (CMC) as measured for instance by surface tension or conductivity of at least 200ppm, preferably at least 500ppm at 30°C and in distilled water - see for instance Critical Micelle Concentrations of Aqueous Surfactant Systems, P. Mukerjee and K J Mysels NSRDS-NBS 36, (1971).

Suitable builder salts useful in the compositions of the invention can be of the polyvalent inorganic and polyvalent organic types, or mixtures thereof. The level of these materials is generally from about 15% to about 90%, preferably from about 20% to about 60% by weight of the total laundry composition. Non-limiting examples of suitable water-soluble, inorganic alkaline builder salts include the alkali metal carbonates, borates, phosphates, pyrophosphates, tripolyphosphates and bicarbonates.

Organic builder/chelating agents that can be incorporated include organic polycarboyxlates and aminopolycarboyxlates and their salts, organic phosphonate derivatives such as those disclosed in US-A-3,213,030, US-A-3,433,021, US-A-3,292,121 and US-A-2,599,807, and carboxylic acid builder salts such as those disclosed in US-A-3,308,067. Particularly useful carboxylates for use in liquid detergents are the $C_{10}$-$C_{20}$, preferably $C_{12}$-$C_{16}$-alkyl or alkenyl succinates such as lauryl, myristyl, palmityl, 2-dodecenyl and 2-pentadecenyl succinate.

Preferred chelating agents include citric acid, nitrilotriacetic (NTA) and ethylenediamine tetra acetic acids (EDTA), hydroxyethylethylenediaminetriacetic acid (HEEDTA), nitrilo(trimethylene phosphonic acid) (NTMP), ethylenediamine tetra(methylene phosphonic acid) (EDTMP) and diethylenetriamine penta-(methylene phosphonic acid) (DETPMP) and salts thereof. Mixtures of organic and/or inorganic builders can be used herein. One such mixture of builders is disclosed in CA-A-755,038, e.g. a ternary mixture of sodium tripolyphosphate, trisodium nitrilotriacetate, and trisodium ethane-1-hydroxy-1,1-diphosphonate.

As mentioned earlier, a valuable feature of the invention is improved clay-soil detergency performance, especially in compositions having a low or zero phosphate builder content. Accordingly, preferred compositions herein have a phosphorus content of less than about 5%, preferably less than about 2% by weight. In compositions of this type, the builder preferably belongs to the alumino silicate type which functions by cation exchange to remove polyvalent mineral hardness and heavy metal ions from solution. A preferred builder of this type has the formulation $Na_z(A1O_2)_z(SiO_2)_y.xH_2O$ wherein z and y are integers of at 6, the molar ratio of z to y is in the range from 1.0 to about 0.5 and x is an integer from about 15 to about 264. Compositions incorporating builder salts of this type form the subject of GB-A-1,429,143, DE-A-2,433,485, and DE-A-2,525,778.

The laundry compositions herein can be supplemented by all manner of detergent and laundering components.

An alkali metal, or alkaline earth metal, silicate can also be present. The alkali metal silicate is preferably from about 3% to about 15% by weight of the total composition. Suitable silicate solids have a molar ratio of $SiO_2$/alkali metal$_2O$ in the range from about 0.5 to about 3.3, more preferably from about 1.0 to about 2.0.

The laundry compositions herein can also contain bleaching components. In general, the bleach is selected from inorganic peroxy salts, hydrogen peroxide, hydrogen peroxide adducts, and organic peroxy acids and salts thereof. Suitable inorganic peroxygen bleaches include sodium perborate mono-and tetrahydrate, sodium percarbonate, sodium persilicate, urea-hydrogen peroxide addition products and the clathrate $4Na_2SO_4:2H_2O_2:1NaCl$. Suitable organic bleaches include peroxylauric acid, peroxyoctanoic acid, peroxynonanoic acid, peroxydecanoic acid, diperoxydodecanedioic acid, diperoxyazelaic acid, mono-and diperoxyphthalic acid and mono-and diperoxyisophthalic acid and salts (especially the magnesium salts) thereof. The bleaching agent is generally present at a level of from about 5% to about 35%, preferably from about 10% to about 25% by weight of total laundry composition. Peroxyacid bleach precursors suitable herein are disclosed in UK-A-2040983, highly preferred being peracetic acid bleach precursors such as tetraacetylethylene diamine, tetraacetylmethylenediamine, tetraacetylhexylenediamine, sodium p-acetoxybenzene sulphonate, tetraacetylglycouril, pentaacetylglucose, octaacetyllactose, methyl O-acetoxy benzoate, sodium 3,5,5-trimethylhexanoyloxybenzene sulfonate, sodium 3,5,5-trimethylhexanoyloxybenzoate, sodium 2-ethylhexanoyloxybenzenesulfonate, sodium nonanoyloxybenzenesulfonate and sodium octanoyloxybenzenesulfonate. In laundry detergent compositions, the level of bleach precursor is generally from about 0.5% to about 10%, preferably from about 1% to about 6% by weight of the total composition. In additive compositions, however, the bleach precursor is preferably added in a level of from about 1% to about 50%, preferably from about 5% to about 35% by weight thereof.

Other optional components of the compositions herein include suds suppressors, enzymes, fluorescers, photoactivators, soil suspending agents, anti-caking agents, pigments, perfumes, fabric conditioning agents etc.

Suds suppressors are represented by materials of the silicone, wax, vegetable and hydrocarbon oil and phosphate ester varieties. Suitable silicone suds controlling agents include polydimethylsiloxanes having a molecular weight in the range from about 200 to about 200,000 and a kinematic viscosity in the range from about 20 to about 2,000,000 mm²/s, preferably from about 3000 to about 30,000 mm²/s, and mixtures of siloxanes and hydrophobic silanated (preferably trimethylsilanated) silica having a particle size in the range from about 10 millimicrons to about 20 millimicrons and a specific surface area above about 50 m²/g. Suitable waxes include microcrystalline waxes having a melting point in the range from about 65°C to about 100°C, a molecular weight in the range from about 4000-1000, and a penetration value of at least 6, measured at 77°C by ASTM-D1321, and also paraffin waxes, synthetic waxes and natural waxes. Suitable phosphate esters include mono-and/or di-$C_{16}$-$C_{22}$ alkyl or alkenyl phosphate esters, and the corresponding mono-and/or di alkyl or alkenyl ether phosphates containing up to 6 ethoxy groups per molecule.

Enzymes suitable for use herein include those discussed in US-A-3,519,570 and US-A-3,533,139. In liquid detergents, enzyme stabilizers such as propanediol, sodium formate, calcium and boric acid are also useful. Suitable fluorescers include Blankophor MBBH (Bayer AG) and Tinopal CBS-x and EMS (Ciba Geigy). Photoactivators are discussed in EP-A-57088, highly preferred materials being zinc phthalocyanine, tri-and tetra-sulfonates. Suitable fabric conditioning agents include smectite-type clays as disclosed in GB-A-1400898 and di-$C_{12}$-$C_{24}$ alkyl or alkenyl amines and ammonium salts.

Antiredeposition and soil suspension agents suitable herein include the ethoxylated amine,imine and ammonium compounds disclosed in EP-A-0,112,593, EP-A-0,111,965. EP-A-0,111,984, EP-A-0,111,976 and EP-A-0,112,592 as well as cellulose derivatives such as methylcellulose, carboxymethylcellulose and hydroxyethylcellulose, and homo-or co-polymeric polycarboxylic acids or their salts in which the polycarboxylic acid comprises at least two carboxyl radicals separated from each other by not more than two carbon atoms. Polymers of this type are disclosed in GB-A-1,596,756. Preferred polymers include copolymers or salts thereof of maleic anhydride with ethylene, methylvinyl ether, acrylic acid or methacrylic acid, the maleic anhydride constituting at least about 10 mole percent, preferably at least about 20 mole percent of the copolymer. These polymers are valuable for improving whiteness maintenance, fabric ash deposition, and cleaning performance on clay soils.

The laundry detergent and additive compositions of the invention can be formulated, packaged and retailed in conventional granular, powdery or liquid form or the composition can be formulated as part of a laundry product which composes the composition in water-releasable combination with a water-insoluble substrate or a single-or multi-compartment sachet. Laundry products of this kind are valuable herein from the viewpoint of providing a slow and sustained release of the soil-removal polymer into the laundry solution, a factor which appears to be beneficial for achieving optimum soil-release and single-cycle cleaning advantages.

Laundry products preferred for use herein comprise a substrate or sachet formed from a flexible, water-insoluble sheet-like material. The sheet-like material may be made of paper, woven or non-woven fabrics or the like.

The basis weight of the water-insoluble sheet is preferably from about 10 to about 70 grams/sq metre, more preferably from about 20 to about 50 grams/sq metre. Preferred materials for use herein are apertured nonwoven fabrics which can generally be defined as adhesively or thermo-bonded fibrous or filamentous products, having a web or carded fibre structure (where the fibre strength is suitable to allow carding) or comprising fibrous mats, in which the fibres of filaments are distributed haphazardly or in random array (i.e. an array of fibres in a carded web wherein partial orientation of the fibres is frequently present as well as a completely haphazard distributional orientation) or substantially aligned. The fibres or filaments can be natural (e.g. wool, silk, wood pulp, jute, hemp, cotton, linen, sisal, or ramie), synthetic (e.g. rayon, cellulose, ester, polyvinyl derivatives, polyolefins, polyamides, or polyesters) or mixtures of any of the above.

Generally, non-woven cloths can be made by air or water laying processes in which the fibres or filaments are first cut to desired lengths from long strands, passed into a water or air stream, and then deposited onto a screen through which the fibre-laden air or water is passed. The deposited fibres or filaments are then adhesively or thermo-bonded together, dried cured and otherwise treated as desired to form the non-woven cloth. Non-woven cloths which are spin-bonded, spin-laced or melt-blown are also suitable however.

Preferably, the non-woven cloth is made from cellulosic fibres, particularly from regenerated cellulose or rayon, which are lubricated with standard textile lubricant such as sodium oleate. The non-woven cloth preferably also has a content of a polyolefin such as polypropylene to allow for heat sealing to the poly-(ethylene oxide) film. Preferably the fibres are from about 4 to about 50mm, especially from about 8mm to about 20mm, in length and are from about 1 to about 5 denier (denier is an internationally recognised unit in yarn measure, corresponding to the weight in grams of a 9,000 meter length of yarn).

Preferably the fibres are at least partially orientated haphazardly, particularly substantially haphazardly, and are adhesively bonded together with hydrophobic or substantially hydrophobic binder-resin, particularly with a nonionic self-crosslinking acrylic polymer or polymers. In highly preferred embodiments, the cloth comprises from about 75% to about 88%, especially from about 78% to about 84% fibre and from about 12% to about 25%, especially from about 16% to about 22% hydrophobic binder-resin polymer by weight and has a basis weight of from about 10 to about 70, preferably from 20 to 50g/$m^2$. Suitable hydrophobic binder-resins are ethylacrylate resins such as Primal HA24, Rhoplex HA8 and HA16 (Rohm and Haas, Inc) and mixtures thereof.

The substrate apertures, which extend between opposite surfaces of the substrate, are normally in a pattern and are formed during lay-down of the fibres to produce the substrate. Exemplary apertured non-woven substrates are disclosed in US-A-3,741,724, US-A-3,930,086 and US-A-3,750,237.

An example of an apertured non-woven substrate suitable herein is a polypropylene-containing regenerated cellulose sheet of 1.5 denier fibres bonded with Rhoplex HA 8 binder (fibre:binder ratio of about 77:23) having a basis weight of about 35 g/$m^2$ and about 17 apertures/$cm^2$. The apertures are generally ellipitical in shape and are in side-by-side arrangement. The apertures have a width of about 0.9mm and a

7

length of about 2.5mm measured in a relaxed condition. Another highly preferred substrate based on 1.5 denier regenerated cellulose fibres with Rhoplex HA8 binder has a fibre:binder ration of about 82:18, a basis weight of about 35g/m2, and about 22 apertures/cm2. In this example, the apertures are generally square-shaped with a width of about 1.1mm. The apertures are again disposed in side-by-side arrangement.

In the substrate embodiments of the invention, the laundry composition is coated on or impregnated into the substrate at a weight ratio of composition : substrate of at least about 3:1, preferably at least about 5:1. In these embodiments, the laundry composition preferably contains at least about 5%, more preferably at least about 15% by weight of composition of water-soluble or water-dispersible organic binding agent. Preferably, the binding agent is selected from polyethylene glycols of molecular weight greater than about 1,000, more preferably greater than about 4,000, $C_{12}$-$C_{18}$ fatty acids and esters and amides thereof, polyvinyl pyrrolidone of molecular weight in the range from about 40,000 to about 700,000, and $C_{14}$-$C_{24}$ fatty alcohols ethoxylated with from about 14 to about 100 moles of ethylene oxide.

The laundry compositions of the invention in granular or powder form are preferably made by spray-drying an aqueous slurry comprising anionic surfactant and detergency builder to a density of at least about 0.3g/cc, spraying-on nonionic surfactant, where present, and optionally comminuting the spray-dried granules in for example a Patterson-Kelley twin shell blender to a bulk density of at least about 0.5g/cc. The aqueous slurry for spray drying preferably comprises from about 30% to about 60% water and from about 40% to about 70% of the detergency builder; it is heated to a temperature of from about 60°C to about 90°C and spray dried in a current of air having an inlet temperature of from about 200°C to about 400°C, preferably from about 275°C to about 350°C, and an outlet temperature of from about 95°C to about 125°C, preferably from about 100°C to about 115°C. The weight average particle size of the spray dried granules is from about 0.15 to about 3mm, preferably from about 0.5mm to about 1.4mm. After comminution, the weight average particle size is from about 0.1 to about 0.5mm, preferably from about 0.15 to about 0.4mm.

In laundry compositions in granular or powder form, the soil release polymer is preferably added as a separate agglomerate comprising the polymer together with a solid diluent. Preferred diluents are inorganic and include alkali metal, alkaline earth metal and ammonium sulfates, chlorides, carbonates, ortho-, pyro- and polyphosphates. The agglomerates preferably comprise 5%-50% by weight thereof of polymer and 50%-95% by weight thereof of binder.

The present invention also encompasses fabric conditioning compositions and laundry articles adapted to provide conditioning benefits within an automatic laundry dryer. Suitable fabric conditioning compositions herein comprise from about 0.1% to about 99% of a fabric softening agent selected from cationic and nonionic fabric softeners and mixtures thereof; and at least 0.1% of the copolymer as soil release agent.

Examples of fabric softening agents are described in US-A-4,103,047, US-A-4,237,155, US-A-3,686,025, US-A-3,849,435 and US-A-4,037,996. Particularly preferred cationic fabric softeners include quaternary ammonium salts such as dialkyl dimethylammonium chlorides, methylsulfates and ethylsulfates wherein the alkyl groups can be the same or different and contain from about 14 to about 22 carbon atoms. Examples include ditallowalkyldimethylammonium methylsulfate, distearyldimethylammonium methylsulfate, dipalmityldimethylammonium methylsulfate and dibehenyldimethylammonium methylsulfate. Also preferred is the carboxylic acid salt of a tertiary alkylamine disclosed in US-A-4,237,155. Examples include stearyldimethylammonium stearate, distearylmethylammonium myristate, stearyldimethylammonium palmitate, distearylmethylammonium palmitate, and distearylmethylammonium laurate. These carboxylic salts can be made in situ by mixing the corresponding amine and carboxylic acid in the molten fabric conditioning composition.

Examples of nonionic fabric softeners are the sorbitan esters and $C_{12}$-$C_{26}$ fatty alcohols and fatty amines.

Although the fabric conditioning aspect of the present invention encompasses aqueous fabric softener compostions of the conventional rinse-added type, in its preferred aspect, the fabric conditioning composition is incorporated as part of a laundry article designed to provide conditioning benefits within an automatic laundry dryer. In this case, the fabric conditioning composition should have a melting point of at least about 38°C and be flowable at dryer operating temperatures.

A preferred laundry article of the present invention includes a fabric conditioning composition which comprises 10% to 70% of the polymeric soil release agent, and 30% to 90% of fabric softening agent, the fabric softening agent being selected from cationic and nonionic fabric softeners, and mixtures thereof. Preferably, the fabric softening agent comprises a mixture of about 5% to about 80% of a cationic fabric softener and about 10% to 85% of a nonionic fabric softener by weight of said fabric conditioning composition. The selection of the components is such that the resulting fabric conditioning composition has a melting point above about 38°C and being flowable at dryer operating temperatures.

A preferred fabric conditioning composition comprises a mixture of about 10% to about 50%, preferably about 20% to about 40% of C$_{10}$-C$_{26}$ alkyl sorbitan esters (especially the mono-and diesters and ethoxylates thereof), about 5% to about 25%, preferably about 7% to about 20% of a quaternary ammonium salt (especially the methylsulfate) and about 5% to about 25%, preferably about 7% to about 20% of a tertiary C$_{14}$-C$_{22}$ alkyl or dialkylamine.

Another preferred fabric conditioning composition comprises from about 5% to about 50%, preferably from about 15% to about 35% of a carboxylic acid salt of a tertiary C$_{14}$-C$_{22}$ alkylamine, in combination with about 10% to about 25%, preferably about 10% to about 20% of a C$_{14}$-C$_{22}$ fatty alcohol and from about 5% to about 25%, preferably from about 7% to about 20% of a di-C$_{14}$-C$_{22}$ alkyldimethylammonium salt.

A highly preferred article herein comprises the fabric conditioning composition releasably affixed to a flexible substrate in a sheet configuration. Highly preferred paper, woven or nonwoven "absorbent substrates useful herein are fully disclosed in US-A-3,686,026 and EP-A-0,194,127.

In the Examples, the abbreviations used have the following designation:

| | | |
|---|---|---|
| LAS | : | Sodium linear C$_{12}$ alkyl benzene sulphonate |
| TAS | : | Sodium tallow alkyl sulphate |
| C$_{14/15}$AS | : | Sodium C$_{14}$-C$_{15}$ alkyl sulphate |
| TAE$_n$ | : | Hardened tallow alcohol ethoxylated with n moles of ethylene oxide per mole of alcohol |
| TEA | : | Triethanolamine |
| TWCFA | : | Topped, whole cut coconut fatty acid |
| EOPEI | : | $$(EO)_y \quad (EO)_y$$ $$\underset{|}{\phantom{x}} \qquad \underset{|}{\phantom{x}}$$ $$(EO)_y[NC_2H_4]_nN(EO)_y$$ n = 4, y = 15 |
| C$_{14}$TMAB | : | C$_{14}$ alkyl trimethyl ammonium bromide |
| Dobanol 45-E-7 | : | A C$_{14}$-C$_{15}$ primary alcohol condensed with 7 moles of ethylene oxide, marketed by Shell |
| INOBS | : | Sodium 3,5,5-trimethyl hexanoyl oxybenzene sulphonate |
| TAED | : | Tetraacetylethylenediamine |
| Silicone/Silica | : | 85:15 mixture of polydimethylsiloxane and silanated silica prilled with STPP and TAE$_{80}$ |
| Enzyme | : | Savinase prills |

STPP : Sodium tripolyphosphate

Zeolite : Zeolite 4A

Polymer : Terephthalate soil release polymer of formula I: u = 3.9, v = 0.3, a = 0.45, b = 0.55, c = 0, X = methyl, PEG = $PEG_1$ = $PEG_{43}$

Polymer 1 : Terephthalate soil release polymer of formula I: u = 2.8, v = 0.4, a = 0.75, b = 0.25, c = 0

Gantrez AN119 : Moleic anhydride/vinyl methyl ether copolymer mol. wt about 240,000

Metasilicate : Sodium metasilicate

$Na_2CO_3$ : Sodium carbonate

Silicate : Sodium silicate ($SiO_2$:$Na_2O$ = 1.6:1)

Perborate : Anhydrous sodium perborate bleach of empirical formula $NaBO_2.H_2O_2$

Percarbonate : Sodium percarbonate

MA/AA : Maleic acid/acrylic acid copolymer, 1:3 mole ratio, m.wt. 70,000

EDTA : Sodiumethylenediaminetetraacetate

Brightener : Tinopal (RTM) CBS-X

EDTMP : Ethylenediamine tetra(methylene phosphonic acid), marketed by Monsanto, under the Trade name Dequest 2041

DETPMP : Diethylenetriamine penta(methylenephosphonic acid)

DTDMAMS : Ditallow dimethylammonium methylsulfate

DTMA : Ditallowdimethylamine

10

| | | |
|---|---|---|
| SMS | : | Sorbitan monostearate |
| SDMA | : | Stearyldimethylamine |
| Clay | : | Bentolite L sold by Southern Clay Products. |
| Substrate 1 | : | Non-woven fabric formed of 100% unbleached crimped rayon fibres of 1:5 denier bonded with 18% polyacrylate binder; basis weight 35g/m$^2$; 22 square-shaped apertures/cm$^2$; side dimension 1.1mm |
| Substrate 2 | : | Non-woven fabric formed of 3 denier, 1-9/16" long rayon fibres with 30% PVA binder, basis weight 16g/sq yd. |

EXAMPLES 1 TO 6

Laundry additive products according to the invention are prepared as follows. For each product, the components of the laundry additive composition are mixed at a temperature of about 65°C and passed through a Fryma Colloid Mill, Model MK95-R/MZ 80R (made by M.M. Process Equipment Ltd of M.M. House, Frogmore Road, Hemel Hempstead, Hertfordshire, United Kingdom) in which the grinding faces are set to a separation of about 180 microns. The melt is then fed through a pair of counterrotating rolls heated to 76°C and having a nip setting of 250 microns and is transferred to substrate moving counter to one of the rollers by wiping. The coated substrate is finally passed between a pair of static plates having a spacing of 180 microns, air-cooled, and cut into sheets of size 35 $^\times$ 23cm.

11

| | EXAMPLES | | | | | |
|---|---|---|---|---|---|---|
| | 1 | 2 | 3 | 4 | 5 | 6 |
| LAS | – | 3 | – | – | 5 | – |
| $C_{12/14}AS$ | 5 | 3 | 6 | – | 3 | 8 |
| $TAE_{25}$ | – | 3 | – | – | – | 4 |
| $C_{14}TMAB$ | 2 | 3 | 4 | 2 | 1 | 3 |
| Dobanol 45–E–7 | 5 | 3 | 5 | 5 | 5 | – |
| PEG 8000 | 5 | 5 | 7 | 4 | 7 | 8 |
| TAED | 5 | – | – | 5 | – | – |
| INOBS | – | 3 | – | – | 3 | – |
| Silicone/Silica | 0.3 | 0.2 | 0.2 | 0.2 | 0.3 | 0.3 |
| Gantrez AN119 | 0.3 | – | – | 0.5 | – | 0.5 |
| Perborate | – | – | 5 | – | – | – |
| EDTA | – | – | – | – | – | – |
| Polymer | 1 | 0.5 | 2 | 1 | 2 | 1.5 |
| Brightener | – | 0.3 | 0.1 | 0.1 | 0.2 | 0.1 |
| EDTMP | – | – | 1.5 | 0.5 | – | – |
| Moisture | 0.8 | 0.5 | 0.6 | 0.2 | 0.5 | 0.7 |
| Substrate | 2.6 | 2.6 | 2.6 | 2.6 | 2.6 | 2.6 |

When used as laundry additive products together with a main wash laundry detergent composition, the above products provide excellent soil release and cleaning performance without detriment to clay-soil detergency and anti-redeposition performance

## EXAMPLES 7 TO 12

Six laundry products are prepared as follows:

A base powder composition is first prepared by mixing all components except Dobanol 45E7, bleach, bleach activator, enzyme, suds suppressor, phosphate and carbonate in a crutcher as an aqueous slurry at a temperature of about 55°C and containing about 35% water. The slurry is then spray dried at a gas inlet temperature of about 330°C to form base powder granules and the granules are comminuted in a Patterson-Kelley twin shell blender. The bleach activator where present, is then admixed with $TAE_{25}$ as binder and extruded in the form of elongate particles through a radial extruder as described in European Patent Application Number 62523. The bleach activator noodles, bleach, enzyme, suds suppressor, phosphate and carbonate are then dry-mixed with the base powder composition and finally Dobanol 45E7 is sprayed into the final mixture. Each composition had a bulk density of about 0.7g/cc.

|                    | 7   | 8   | 9   | 10  | 11  | 12  |
|--------------------|-----|-----|-----|-----|-----|-----|
| LAS                | 5   | 8   | 8   | 3   | 4   | 9   |
| TAS                | –   | –   | 3   | –   | 4   | 3   |
| $C_{14/15}AS$      | 5   | 8   | –   | 1   | –   | –   |
| $TAE_{25}$         | 0.5 | 0.3 | 0.5 | 0.2 | 0.8 | 0.5 |
| $C_{14}TMAB$       | 2   | 3   | 1   | 1   | 2   | 4   |
| Dobanol 45-E-7     | 2   | 2   | 4   | 10  | 4   | –   |
| Clay               | –   | 6   | –   | –   | 4   | 7   |
| INOBS              | –   | 2   | 4   | –   | –   | 3   |
| TAED               | 3   | –   | 0.5 | –   | 2   | –   |
| Polymer            | 2   | 3   | 1   | 4   | 2   | 1   |
| Silicone/Silica    | 0.2 | 0.2 | 0.4 | 0.8 | 0.4 | 0.5 |
| Enzyme             | 0.5 | 0.6 | 0.7 | 0.8 | 0.5 | 0.6 |
| STPP               | 6   | –   | 18  | –   | 2   | 4   |
| Zeolite            | 12  | 18  | 6   | 22  | 20  | 18  |
| Metasilicate       | –   | –   | –   | –   | –   | 5   |
| $Na_2CO_3$         | 5   | –   | 8   | –   | –   | 5   |
| Silicate           | 5   | 6   | 10  | 6   | 6   | –   |
| Perborate          | 10  | –   | 14  | –   | –   | 12  |
| Percarbonate       | –   | –   | –   | –   | 20  | –   |
| MA/AA              | 4   | 3   | 2   | 2   | 4   | 2   |
| EDTA               | 0.5 | 0.5 | 0.5 | 0.5 | 0.5 | 0.5 |
| Brightener         | 0.2 | 0.2 | 0.2 | 0.2 | 0.2 | 0.2 |
| EDTMP              | 0.2 | 0.1 | 0.2 | 0.3 | 0.2 | 0.1 |
| Sulphate, moisture | ——————— To 100 ——————— |

A twin-compartment sachet is made from a non-woven fabric formed of 100% unbleached crimped rayon fibres of 1.5 denier bonded with 18% polyacrylate builder, the non-woven fabric having a basis weight of 35g/m². The sachet is made from a sheet of the fabric measuring 120mm × 80mm by folding midway along the long dimension, sealing along the two opposing free edges with sodium silicate solution and along a longitudinal seam parallel to and half-way between the two opposing edges, filling the two compartments with 120cc each of detergent composition 7 and then sealing along the open edge of the sachet. The procedure is then replicated five times using composition 8 to 12 respectively.

When used as main-wash laundry detergent products, the above examples provide excellent soil-release and cleaning performance without detriment to clay-soil detergency and anti-redeposition performance.

Examples 13 to 18

Dryer-added fabric conditioning articles are each prepared as follows. The fabric conditioning composition is liquidfied by admixing the individual components at 70°C. The substrate in them impregnated by coating one side of a continuous length of substrate and contacting it with a rotating cyclindrical member which serves to press the liquidfied mixture into the interstices of the substrate. The substrate is passed over several chilled tensioning rolls which help to solidify the conditioning composition. The substrate sheet is 9″ wide and perforated at 11″ intervals to provide detachable sheets. Each sheet is cut with a set of knives to provide three evenly spaced parallel slits about 4″ in length.

|                                    | 13   | 14   | 15   | 16    | 17    | 18   |
|------------------------------------|------|------|------|-------|-------|------|
| Polymer                            | 37.2 | 43.5 | 43.5 | 44.1  | 37.5  | 45.4 |
| DTDMAMS                            | 14.1 | 12.7 | 12.7 | 12.25 | 11.25 | 11.1 |
| DTMA                               | 14.1 | 12.7 | 12.7 | 12.25 | 11.25 | –    |
| SMS                                | 28.2 | 25.4 | 25.4 | 24.5  | 22.5  | –    |
| SDMA                               | –    | –    | –    | –     | –     | 13.9 |
| $C_{16}$-$C_{18}$ Fatty acid       | –    | –    | –    | –     | –     | 12.8 |
| $C_{16}$-$C_{18}$ Fatty Alcohol    | –    | –    | –    | –     | –     | 11.1 |
| PEG 8000                           | –    | –    | –    | –     | 12.5  | –    |
| Clay                               | 6.4  | 5.7  | 5.7  | 5.6   | 5.0   | 4.4  |
| Perfume                            | –    | –    | –    | 1.3   | –     | 1.3  |
| Coating weight grams/9″x11″ sheet  | 4.1  | 4.6  | 4.6  | 4.6   | 2.6   | 3.3  |

The above articles deliver good soil release and softening performance when added to the laundry in an automatic laundry dryer.

### Examples 19 to 20

Liquid detergent compositions are prepared as set out below:

|  | 19 | 20 |
|---|---|---|
| $C_{12}$ alkyl benzene sulfonic acid | 11 | 12 |
| $C_{12}$-$C_{14}$ alkyl sulfate (TEA salt) | 4 | 4 |
| TEA | 5 | 4 |
| NaOH | 3.5 | 4 |
| Dobanol 45-E-7 | 12 | 10 |
| Ethanol | 6 | 5 |
| Propane diol | 1.5 | 3 |
| Na formate | 1 | 0.8 |
| DETPMP | 1.7 | 2 |
| Citric acid | 0.9 | 1 |
| TWCFA | 11 | – |
| Oleic acid | 4 | – |
| Polymer | 0.5 | 0.3 |
| EOPEI | 0.3 | 0.7 |
| $C_{12}$-$C_{14}$ alkenyl succinate | – | 20 |
| Protease | 0.4 | 0.5 |
| Amylase | 0.1 | – |
| Water | 0.1 | – |

When used as main wash laundry detergent products, the above examples provide excellent soil release and cleaning performance without detriment to clay-soil detergency and anti-redeposition performance.

### Examples 21 to 26

Six laundry products are prepared following the method of Examples 7 to 12 but the soil release polymer is added as a separate agglomerate either with sodium tripolyphosphate (Examples 21 to 23) or sodium carbonate (Examples 24 to 26). The agglomerates in each instance contain 30% soil release polymer and are prepared in a fluidized bed.

The formulations are as follows:

15

| | 21 | 22 | 23 | 24 | 25 | 26 |
|---|---|---|---|---|---|---|
| LAS | 5 | 8 | 8 | 3 | 4 | 9 |
| TAS | – | – | 3 | – | 4 | 3 |
| $C_{14/15}AS$ | 5 | 8 | – | 1 | – | – |
| $TAE_{25}$ | 0.5 | 0.3 | 0.5 | – | 0.8 | 0.5 |
| $C_{14}TMAB$ | 2 | 3 | 1 | – | 2 | 4 |
| Dobanol 45–E–7 | 2 | 2 | 4 | 6 | 4 | – |
| Clay | – | 6 | – | – | 4 | 7 |
| INOBS | – | 2 | 4 | – | – | 3 |
| TAED | 3 | – | 0.5 | – | 2 | – |
| Agglomerate of Polymer 1 | 3 | 5 | 6 | 5 | 2 | 3 |
| Silicone/Silica | 0.2 | 0.2 | 0.4 | 0.8 | 0.4 | 0.5 |
| Enzyme | 0.5 | 0.6 | 0.7 | 0.8 | 0.5 | 0.6 |
| STPP | 20 | 24 | 18 | – | – | – |
| Zeolite | – | – | 6 | 22 | 24 | 18 |
| Metasilicate | – | – | – | – | – | 5 |
| $Na_2CO_3$ | 5 | – | 8 | – | – | 5 |
| Silicate | 5 | 6 | 10 | 6 | 6 | – |
| Perborate | 10 | – | 14 | – | – | 12 |
| Percarbonate | – | – | – | – | 20 | – |
| MA/AA | 4 | 3 | 2 | 2 | 4 | 2 |
| EDTA | 0.5 | 0.5 | 0.5 | 0.5 | 0.5 | 0.5 |
| Brightener | 0.2 | 0.2 | 0.2 | 0.2 | 0.2 | 0.2 |
| EDTMP | 0.2 | 0.1 | 0.2 | 0.3 | 0.2 | 0.1 |
| Sulphate, moisture | | | To 100 | | | |

When used in main-wash laundry detergent products, the above examples provide excellent soil-release and cleaning performance without detriment to clay-soil detergency and anti-redeposition performance.

## Claims

1. A copolymer based on a linear terephthalate ester backbone and having the general formula I

$$Z-[(T-PO)_u(T-PEG)_v]-T-Z_1 \quad I$$

wherein Z and $Z_1$ are chain terminating moieties having the empirical formula II

$$(PEG_1-X)_a(PO-H)_b(PEG-H)_c \quad II$$

wherein PEG and $PEG_1$ are identical or different poly(oxyethylene)oxy moieties each having a molecular weight in the range from about 300 to about 6000; X is $C_1$-$C_4$ alkyl or acyl containing from 1 to 4 carbon atoms in the alkyl moiety; T is a terephthaloyl moiety; PO is oxypropyleneoxy; u is from about 0.5 to about 50; v is from about 0.05 to about 20; a is from about 0.2 to about 0.95; b is from 0 to about 0.8; c is from 0 to about 0.8; and b + c is at least about 0.05; wherein u, v, a, b, c represent the average number of the corresponding units; and wherein the T-PO and T-PEG units are randomly distributed along the terephthalate ester backbone.

2. A copolymer according to Claim 1 wherein the ratio of u:v is in the range from about 50:1 to about 1:1, preferably from about 15:1 to about 2:1, more preferably from about 10:1 to about 3:1.

16

3. A copolymer according to Claim 1 or 2 wherein u is in the range from about 2 to about 15, preferably form about 3 to about 10, and v is in the range from about 0.1 to about 5, preferably from about 0.1 to about 3.

4. A copolymer according to any of Claims 1 to 3 wherein a is in the range from about 0.35 to about 0.9, b is in the range from about 0.1 to about 0.65 and c is in the range from about 0 to about 0.15.

5. A process of making the copolymer of Claim 1, the process comprising reacting a di-$C_1$-$C_4$ alkyl ester of terephthalic acid, 1,2-propylene glycol, polyethylene glycol and an X-capped polyethyleneglycol at a temperature in the range of from about 120°C to about 220°C in the presence of a transesterification catalyst to prepare a mixture of glycol/terephthalate ester intermediate products, followed by polymerization at a temperature in the range of from about 200°C to about 280°C in the presence of a polymerization catalyst.

6. A detergent composition comprising

(a) from about 1% to about 75% by weight of an anionic, nonionic, ampholytic, zwitterionic or cationic surfactant or mixture thereof; and

(b) at least 0.1% by weight of a copolymer according to any of Claims 1 to 4 as soil-release agent.

7. A composition according to Claim 6 having a phosphorus content of less than about 5%, preferably less than about 2%.

8. A composition according to Claim 7 comprising from about 5% to about 50% of a water-insoluble aluminosilicate ion-exchange material.

9. A laundry product comprising a laundry detergent composition according to any of Claims 6 to 8 in water-releasable combination with a water-insoluble substrate or a single-or multi-compartment sachet.

10. A fabric conditioning composition comprising

(a) from about 0.1% to about 99% of a fabric softening agent selected from cationic and nonionic fabric softeners and mixtures thereof; and

(b) at least 0.1% of a copolymer according to any of Claims 1 to 4 as soil release agent.

11. A laundry article adapted for providing fabric conditioning benefits within an automatic laundry dryer, the article comprising a fabric conditioning composition according to Claim 10 which is flowable at dryer operating temperatures and dispensing means which provides for release of said conditioning composition within an automatic laundry dryer at dryer operating temperatures.

12. A laundry product comprising a laundry detergent composition in water-releasable combination with a water-insoluble substrate or a single-or multi-compartment sachet, the laundry detergent composition comprising a copolymer based on a linear terephthalate ester backbone and having the general formula I

$$Z-[(T-PO)_u(T-PEG)_v]-T-Z_1 \qquad I$$

wherein Z and $Z_1$ are chain terminating moieties having the empirical formula II

$$(PEG_1-X)_a(PO-H)_b(PEG-H)_c \quad II$$

wherein PEG and $PEG_1$ are identical or different poly(oxyethylene)oxy moieties each having a molecular weight in the range from about 300 to about 6000; X is $C_1$-$C_4$ alkyl or acyl containing from 1 to 4 carbon atoms in the alkyl moiety; T is a terephthaloyl moiety; PO is oxypropyleneoxy; u is from about 0.5 to about 50; v is from about 0.05 to about 20; a is from about 0.2 to about 0.95; b is from 0 to about 0.8; c is from 0 to about 0.8; and b+c is at least about 0.05; wherein u, v, a, b, c represent the average number of the corresponding units; and wherein the T-PO and T-PEG units are randomly distributed along the terephthalate ester backbone.

13. A laundry product according to Claim 12 wherein the ratio of u:v is in the range from about 50:1 to about 1:1, preferably from about 15:1 to about 2:1, more preferably from about 10:1 to about 3:1.

14. A laundry product according to Claim 12 or 13 wherein u is in the range from about 2 to about 15, preferably form about 3 to about 10, and v is in the range from about 0.1 to about 5, preferably from about 0.1 to about 3.

15. A laundry product according to any of Claims 12 to 14 wherein a is in the range from about 0.35 to about 0.9, b is in the range from about 0.1 to about 0.65 and c is in the range from about 0 to about 0.15.

16. A laundry product according to any of Claims 12 to 15 wherein the detergent composition comprises

(a) from about 1% to about 75% by weight of an anionic, nonionic, ampholytic, zwitterionic or cationic surfactant or mixture thereof; and

(b) at least 0.1% by weight of the copolymer

17